# EUROPEAN PATENT APPLICATION

(11) **EP 4 822 403 A1**
(43) Date of publication of application: **14.10.2026**
(21) Application number: 25169792.6
(22) Date of filing: 10.04.2025
(51) Int. Cl.: G01T 1/24, G01T 1/29

(54) **RAPID AND HIGH-DENSITY PARTICLE LOCALIZATION**

(71) Applicant: Universität Zürich, 8006 Zürich (CH)
(72) Inventor: OPPLIGER, Jens, 8620 Wetzikon (CH); MARTINELLI, Leonardo, 8052 Zürich (CH); VAN WORKUM, Patrick, 8052 Zürich (CH); CHANG, Johan, 8008 Zürich (CH)
(74) Representative: Schulz Junghans Patentanwälte PartGmbB

(57) **Abstract**

The invention relates to a method and a computer program for localizing particle impact events (21) on an array detector (10), the array detector (10) comprising a plurality of detection elements (11), the method comprising the steps of:
- acquiring at least one input image (20) indicative of a signal of one or more particle impact events (200), each particle impact event (200) extending over a plurality of input image pixels (21), wherein each particle impact event (200) is caused by an impact of a single particle on a single detection element (11) of the detector array (10), thereby generating a signal cloud (100) extending into neighboring detection elements (11),
- inputting each of the at least one input image (20) to a trained neural network (40) that is configured to determine an output image (30) having output image pixels (31) associated to the input image pixels (21), and to determine for each output image pixel (31) an associated particle number (32) corresponding to a number of particles associated to the output image pixel (31), wherein each output image pixel (32) having an associated particle number (32) greater than zero, is assigned as a particle impact location (102) of an impact event (200),
- outputting from the trained neural network (40) the one or more particle impact locations (102).

## Description

The invention relates to a method for localizing particle impact events on an array detector, a computer program as well as a system configured to execute the method.

Synchrotron and free-electron laser facilities are heavily relying on single-photon detectors (CCD and CMOS technology). Typical readout times are in the range between 0.5 to 4 seconds. With current methods, a photon (or particle)-per-pixel coverage of about 1% is standard practice. Given the high incident particle flux at these facilities, 1% photon-per-pixel coverage is typically reached in a time comparable to the readout time. That is, at a given beamline, half of the synchrotron time is used for detector readout (rather than single-photon detection). The costs of a running a synchrotron beam line is at least 10,000 Euros per day and is even higher for free-electron lasers.

Similarly, X-ray astronomy is a rapidly expanding field since the launch of the Chandra telescope in 1999. New missions, like eROSITA, Athena and XRISM have been launched in the last five years by several space agencies. These experiments all make use of Silicon-CCDs, that provide low-noise, energy sensitivity, and high spatial resolution.

These space research-resources and beam line measurement times are expensive and limited. Therefore, an object of the present invention is to acquire and evaluate more data within a given measurement time on such systems, allowing the execution of more experiments within the same time.

This object is achieved by the invention laid out in the following, in particular by a method of claim 1, a computer program of claim 12, and a system of claim 13.

Advantageous embodiments are described in the dependent claims.

According to a first aspect of the invention, a method for localizing particle impact events on an array detector is disclosed, the array detector comprising a plurality of detection elements, the method comprising the steps of:
- acquiring at least one input image indicative of a signal of one or more particle impact events on the detection elements of the detector array, each particle impact event extending over a plurality of input image pixels, wherein each particle impact event is caused by an impact of a single particle on a single detection element of the detector array, thereby generating a signal cloud extending into neighboring detection elements, particularly wherein said signal cloud represents the particle impact event in the input image, particularly wherein the particle is selected from one of the group of a bosonic particle or one or more kinds of fermionic particle(s), such as photons or neutrons or protons.
- inputting each of the at least one input image to a trained neural network that is configured to determine an output image having output image pixels associated to the input image pixels, wherein the trained neural network is further configured to determine for each output image pixel an associated particle number corresponding to a number of particles associated to the output image pixel, wherein each output image pixel having an associated particle number greater than zero, is assigned as a particle impact location of an impact event in the output image,
- outputting from the trained neural network the one or more particle impact locations, particularly outputting the output image.

The array detector may comprise a pixel-based detector, such as CMOS-CDD or other CCD, wherein the pixels of such detector serve as detection elements.

Particularly, the array detector comprises a single-photon sensitivity, such that with a certain probability, a photon impinging on one of the detection elements causes the detection element to detect the photon, i.e. to produce charges or a voltage indicative of the photon detection event.

The array detector may be a semiconductor detector, for example a Si-based or CdTe-based photon detector. For Si-based and CdTe-based semiconductor detectors, it is the energy band gaps E_{g} (1.1 eV and 1.44 eV respectively), that allows for efficient detection of photons in a range of photon energies.

Like for semiconductor-based solar cells, a semiconductor-based single-photon detector is characterized by a quantum efficiency. Typically, CMOS-CDD and CDD detectors have a quantum efficiency well above 90% within a range of photon energies. For Si-based single photon detectors, the quantum efficiency drops dramatically (below 10% efficiency) for photon energies above 30 keV.

These detectors may also be used for particle detection, in the sense of the current specification.

A particle in the sense of the current specification may be a photon, in particular a photon with energy Eₚ larger than that of the detector semiconductor band gap, E_{g}.

According to another embodiment of the invention, a fraction *ε* = Eₚ/E_{g} is greater than 10, i.e. *ε* > 10. Particularly, said fraction is greater than 50, i.e. *ε* > 50. An upper bound of the photon energy Eₚ may be defined by the above mentioned quantum efficiency of the array detector, that is for example 30 keV for silicon.

Further, according to another embodiment of the invention, a particle may be a bosonic particle, e.g. a photon, or a fermionic particle, e.g. a proton and/or a neutron or an electron.

Once a particle according to any of said embodiments, i.e. in the sense of the specification, impinges on a detection element, it leads to a signal diffusion into adjacent detection elements, e.g. due to Coulomb repulsion.

In particular, for semiconductor-based array detectors, signal diffusion occurs, when the particle energy exceeds the direct semiconductor gap.

For Si-based array detectors, a diffusion length scale of the particle is typically around 25 µm.

The term "image" particularly refers to a data structure representing a spatial distribution of the signal as acquired by the array-detector. The image comprises a plurality of image pixels that are preferably arranged in rows and columns.

The term "output image" and "output image pixel" is to be understood in a broad sense, for example, as a data structure representing a tensor wherein the tensor elements correspond to the output pixels, the tensor values correspond to the values of the output pixels, and the tensor corresponds to the output image. That is, the output image may not be necessarily displayed at any point of the processing of the method. However, in some embodiments, it may be advantageous to render the data structure of the output image as an actual image for display.

According to another embodiment of the invention, each one input image pixel corresponds to exactly one detection element.

However, the input image may have a different association to the detection elements, that is, the input image may have more or less than one input image pixel corresponding to a single detection element.

In any case, in the input image as well as on the detector array, the particle impact event spreads over a plurality of adjacent input image pixels or detection elements respectively.

That is, the input image pixels are associated to the detection elements, wherein the input image represents the spatial distribution of the signal as detected on the array detector or a portion thereof.

Similarly, according to one embodiment, each one output image pixel corresponds to exactly one input image pixel.

According to another embodiment of the invention, each one output image pixel corresponds to exactly one detection element.

According to another embodiment of the invention, the output image may have a different association to the detection elements or the input image, that is, the output image may have more or less than one output pixel corresponding to a single detection element or a single input image pixel.

Depending on the specific application, the number of output image pixels is greater than the number of detection elements, e.g. twice, four-times, nine-times, or sixteen times greater.

According to another embodiment of the invention, each input image pixel or each detection element is associated to two, four, nine, or sixteen output image pixels, essentially subdividing the input image pixel or the detection element into a plurality of output image pixels. Typically, the number of output pixels *Nₒᵤₜ* equals a square number of detection elements or input pixels *Nᵢₙ*, i.e. ${N}_{out} = {N}_{in}^{2}$, wherein the number of detections elements or input pixels is an integer number.

The neural network, in the sense of the invention is an artificial neural network, and comprises a plurality of layers, in particular an input layer and an output layer as well as several intermediate layers. Each layer is composed of multiple artificial neurons, which are connected. Said neurons utilize activation functions and weighted connections to process information, ultimately determining the neural network's operation and learning capability.

Particularly, the trained neural network is a convolution neural network.

The trained neural network processes the image in a way that assigns each output image pixel an associated particle number. The particle number corresponds to the number of particles that impacted on the detection element associated to the output image pixel. In case each one output image pixel corresponds to exactly one detection element, an associated particle number greater zero would indicate that one or more particles impacted on the detection element during signal acquisition, wherein the particle impact location corresponds to a location of the detection element in the detector array.

In case more than one output image pixel is associated to a single detection element, i.e. the output image corresponds to an up-sampled representation of the detection elements, a particle number greater than zero for one of the output image pixels indicates that one or more particles impacted on the associated detection element, wherein the impact location may be provided with a spatial resolution higher than a size of the detection element and thus may be associated to one of the output image pixels that are associated to the detection element.

According to another embodiment of the invention, the trained neural network puts out the output image that comprises the same number of pixels as the input image that is provided to the trained neural network. Said output image provides a high-resolution impact location map. The term "high-resolution" in the context of the output image particularly refers to a spatial resolution of particle impact locations in the output image that is higher than the spatial resolution of the particle impact events in the input image, as said particle impact events may comprise one or more unresolved impact locations of a particle.

The method according to the first aspect of the invention, allows detecting single photons in scenarios of up to 200% and higher average particle-per-detection element coverage, i.e. a factor 100 higher than current algorithms. As such, the method essentially eliminates any readout inefficiency issue of detector arrays. For example, a beam line is operational about 200 days per year. Assuming that the method according to the invention, on average, improves the single-photon/particle counting by strongly reducing the readout time. In this way, significant measurement time savings can be achieved. Thus, allowing a higher throughput of experiments executed.

Inputting the input image into the trained neural network, in particular to the input layer, may be achieved by way of storing the input image on a non-transitory computer-readable storage medium and reading the input image out from said medium to provide it to a hardware component, executing the trained neural network, e.g. one or more processors. The weights and other parameters of the trained neural network may be stored on the same or a different storage medium and provided to the processor(s) as needed.

The output of the trained neural network may be generated by a final layer, e.g. the output layer. The output may be in the form of location coordinates of the particle impact location(s) as determined by the trained neural network.

The particle impact location may comprise an output image pixel location indicative of the detection element on which the particle impinged, or it may be a location with higher spatial resolution than the one provided by the detection element coordinates.

The output may comprise the output image indicative of the determined particle impact locations.

According to another embodiment of the invention, each one output image pixel corresponds to exactly one detection element of the detector array.

This scenario has been elaborated in a previous section. This embodiment allows generating a high-resolution output image or map of particle impact locations. This embodiment further allows for high densities of particle impact events in the input image.

Within the context of the current specification. The term low impact density or the like may be defined and understood as the chance of having two particle impact locations in the same output image pixel or detection element to be less than 1% on average. Similarly, the term medium impact density or the like may be defined as the chance of having three particle impact locations, also referred to as triple event, in the same output image pixel or detection element to be a less than e 1% on average. In the same fashion, the term high impact density or the like may be defined as the chance of triple events being greater than or equal to 1%.

According to another embodiment of the invention, each detection element has more than one output image pixel associated to it, such that each particle impact location is determined with a localization resolution greater than a size of a single detection element.

According to another embodiment of the invention, each input image pixel has more than one output image pixel associated to it, such that each particle impact location is determined with a localization resolution greater than an input image pixel.

For both preceding embodiments, the particle impact location is determined with a localization resolution greater than a size of the detection element or the input image pixel respectively, i.e. the determined particle impact location has a sub-detection element /sub-input pixel resolution.

This allows for super resolution localization of the impact location. This is possible as, for example, an impact of a particle close to a detection element border causes a different signal diffusion pattern than a particle impact in the center of the detection element.

For this, the neural network may be trained with output images that have more output image pixels than detection elements. The trained neural network may provide the impact location in terms of output image pixel integers, which are of higher resolution than the detection elements.

This embodiment allows spatially resolving particle impact events of particles that impinge on the same detector pixel.

According to another embodiment of the invention, the number of input image pixels comprising the particle impact events in at least one input image of the at least one input image is greater than 35%, particularly greater than 50%, more particularly greater than 80% of the number input image pixels, i.e. all input image pixels.

In particular, the number of input image pixels comprising the particle impact events in the input image may be greater than 100%, or even 200% of the number of input image pixels.

Poisson distributed impact events are frequently occurring in nature. That is, particle impact events are independent of each other. Next, the probability of an impact is either uniform or non-uniform across an array detector. Even for the uniform case, particle impact events are not homogenous distributed (unless infinite long counting time is applied). That is, some pixels may have multiple impact events, wherein others remain devoid of a particle impact event.

The higher a density of particle impact events, the more misassignments may occur on a confusion matrix. However, in comparison to existing methods, the number of misassignments is much lower.

For example, to determine the density of particle impact events, a number of impact events may be divided by a number of detection elements. The result may be considered the density.

This embodiment allows for longer measurement time and therefore effective lower readout times.

According to another embodiment of the invention, the neural network is trained to determine only two values for the associated particle number, wherein a first value of the two values, represents a detected particle impact location of one or more particles, wherein a second value, i.e. zero, of the two values is indicative that the output image pixel has no particle impact location associated to it.

This embodiment allows for a robust but only binary evaluation of the input image. According to another embodiment of the invention, in case the associated particle number of an output image pixel is greater than one, a plurality of particles is associated to the same particle impact location.

That is, in this embodiment, a plurality of particles is associated to the same output image pixel.

This embodiment allows generating a map of zero, single and multiple co-localized particle impact locations.

As laid out in previous paragraphs, the particle impact location may correspond to the detection element or may be determined with a higher resolution.

This embodiment allows for an improved analysis and higher particle impact densities in the input image, as even co-localized particle impact events are resolved and marked accordingly.

According to this embodiment, longer measurement times and therefore effective lower readout times are possible and an information on a particle density in an output image may be obtained.

According to another embodiment of the invention, the associated particle number is comprised in the range of 0 to 20 or eve in the range of 0 to 50 or up to 100, particularly wherein the associated particle number is one of 0,1, 2, 3, 4, 5, 6, 7, 8, 9, 10 or greater than 10.

According to another embodiment of the invention the trained neural network is configured to determine associated particle numbers greater than 5, particularly greater than 10.

This embodiment elaborates on co-localized particle impact events.

Typically, existing methods manage to distinguish 1 or 2 co-localized particle impact events in a single image. This embodiment allows for a significantly improved distinction.

According to another embodiment of the invention, the detection elements are semiconductor-based detection elements, wherein the semiconductor exhibits a semiconductor band gap, wherein in case the particles are photons, the energy of the photons is higher than the semiconductor band gap.

This embodiment allows for the signal diffusion to take place in every case of impinging particles.

For *ε* = Eₚ/E_{g}< 10 there is either no or too few excited electrons in the detector pixel. This embodiment allows for reliable operation of the method.

According to another embodiment of the invention, a detector frame rate at which the input images are acquired by the array detector is adjusted such that an average number of the impact events is in the range of 0% to 200% in relation to the number of detection elements, particularly wherein the frame rate is adjusted such that the average number the impact events is in the range of 10% to 100% in relation to the number of detection elements.

This allows for longer measurement times and therefore effective lower readout times to execute an experiment, balancing the impact density, i.e. the particle flux, and the detector frame rate.

According to another embodiment of the invention, a plurality of input images from the array detector is acquired at a detector frame rate with an associated read-out time, wherein processing of each image by the trained neural network takes less than the read-out time, such that the acquired images are processed in real-time.

The frame rate may be composed of a read-out rate and an exposure rate of the array detector. The frame time is the associated measurement time at the frame rate.

This embodiment allows for real-time processing such that experiments, in particular the detector frame rate may be adjusted during execution to adjust the particle density per input image.

According to a second aspect of the invention, a computer program comprising computer program code, that when executed on a computer, executes the method according to the invention.

In particular, the acquisition of the at least one input image may be facilitated by reading out the input image from a non-transitory computer storage medium. This allows all steps of the method to be executed in the framework of the computer program.

From the output of the trained neural network that may be executed on the computer, the output image with the determined particle impact locations and particularly the associated particle number for any co-localized impact events may be displayed on a screen, such as to obtain a visual impression of the events.

Alternatively or additionally, a list or a table of the particle impact locations and, particularly, their associated particle numbers may be put out.

The computer program may be stored on a non-transitory computer-readable storage. According to a third aspect of the invention, a non-transitory computer-readable storage medium comprising the computer program is disclosed.

According to a fourth aspect of the invention, a particle recording system comprises the array detector with detection elements and an evaluation module comprising a computer, wherein the evaluation module is connected to the array detector, wherein the evaluation module is configured to receive recorded input images from the array detector and wherein the evaluation module is further configured to execute the method according to the first aspect.

According to another embodiment of the invention, the computer comprises the computer program.

### Figure description

Particularly, exemplary embodiments are described below in conjunction with the Figures. The Figures are appended to the claims and are accompanied by text explaining individual features of the shown embodiments and aspects of the present invention. Each individual feature shown in the Figures and/or mentioned in said text of the Figures may be incorporated (also in an isolated fashion) into a claim relating to the device according to the present invention.
- Fig. 1: schematically depicts a signal cloud;
- Fig. 2: is a flow-chart of the processing of the input image with the trained neural network;
- Fig. 3: depicts a simulated input image and the corresponding ground truth;
- Fig. 4: shows a comparison of the invention to a method known in the art;
- Fig. 5: shows the corresponding confusion matrix;
- Fig. 6: shows the results of two exemplary simulated data sets;
- Fig. 7: shows the structural similarity index measure (SSIM) of the results;
- Fig. 8: shows a schematic depiction of a system for executing the method according to the invention.

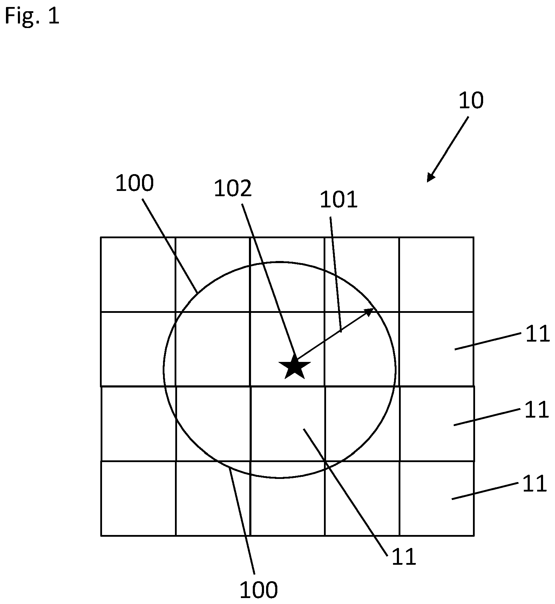

Fig. 1 illustrates an exemplary signal cloud 100 extending across a plurality of detection elements 11 of an array detector 10. The detection elements 11 may be detector pixels of a semiconductor-based array detector. The array detector 10 may comprise, for example, a single-photon-sensitive imaging sensor fabricated using CMOS, SPAD (single-photon avalanche diode), or hybrid pixel technology. The array is configured to detect and spatially resolve transient charge distributions resulting from discrete particle interactions with the detection elements 11.

In the example shown in Fig. 1, the signal cloud 100 arises from a particle impact event 12 occurring at a detection element 11, where a single particle impinges upon the detector substrate in a detection element. The particle impact initiates a cascade of ionization and/or excitation processes, resulting in the generation of charge carriers, such as electron-hole pairs. These carriers undergo spatial diffusion into neighboring detection elements due to mutual Coulomb repulsion and possibly due to local electric field inhomogeneities within the substrate, forming a diffused distribution, the signal cloud 10, over adjacent detection elements 11. The array detector may transform the detected signal from such impact events into an image upon read-out of a detector frame.

This image 20 is representative of the signal of the one or more particle impact events registered by the array detector 10, and is termed the input image 20 as it may serve as the basis for further evaluation. The input image 20 comprises input image pixels 21, that can adopt a value representing a signal strength 20. The input image pixels 21 are associated to the detection elements 11, wherein the input image 20 represents the spatial distribution of the signal as detected on the array detector 10 or a portion thereof.

In a typical embodiment, the input image 20 may have the same number of input image pixels 21 as there are detection elements 11, wherein each input image pixel 21 is associated to exactly one detection element 11.

Importantly, in case the input image 21 comprises more input image pixels than there are detection elements 11, each input image pixel 21 is associated with one detection element 11.

Each recorded signal cloud 100 therefore translates into a particle impact event 200, which is the corresponding representation of the signal cloud 100 in the input image 20.

The geometric and electronic characteristics of the signal cloud 100 may be described by two principal parameters. A first of these two parameters is a diffusion length 101, which defines an effective radial extent of the charge distribution emanating from an impact location. The diffusion length - induced by Coulomb interaction - reflects the spatial scale over which the generated carriers spread and may be influenced by material properties, carrier mobility, and carrier lifetime.

In Fig. 1, the diffusion length 101 can be understood as the radius around an impact location 102 within which the majority of the carrier density is confined.

The second of the two parameters is a statistical quantity that represents the number of charge carriers generated by the particle interaction. This quantity follows a Gaussian distribution whose mean is proportional to the deposited energy of the impinging particle and may vary based on the particle type and/or a particle energy, and whose standard deviation is proportional to the square root of the mean. A signal strength detected signal cloud across the detection elements is thus a function of the carrier count, while the spatial profile of that signal cloud is governed by the diffusion length. A suitable spatial distribution modelling may therefore be governed by a 2D-Gaussian distribution.

Detection elements 11 located within the diffusion length 101 may receive varying fractions of the signal, forming a spatial intensity distribution, the signal cloud 100, centered around the impact location 102. Said distribution is characteristic of diffusion-based signal clouds and can be exploited in subsequent signal processing to estimate both the position and energy of the initiating particle.

It is noted, that, for example, in comparison with optical methods, such as super-resolution microscopy, which in some variants exploits a centroiding-approach of sparsely located point-spread functions, wherein each point-spread function comprises a plurality of single photon impact events, wherein each single-photon impact event causes solely a signal generation in the detection element onto which the photon impinged (and thus no signal cloud is formed on the detection elements or only in rare cases <2% by way of cross-talk between the detection elements). The method according to the invention truly determines single-particle impact events from signal clouds according to the principles laid out in the previous paragraphs.

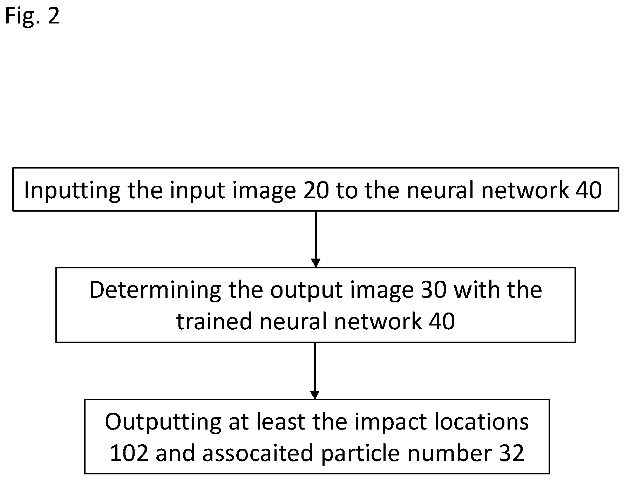

Fig. 2 schematically depicts the further processing of the input image 20 by a trained neural network 40.

The trained neural network 40 is an artificial neural network and configured to determine an output image 30 comprising output image pixels 31, wherein each output pixel 30 has an associated pixel value representative of an associated particle number 32. The particle number 32 in turn corresponds to the number of particles associated to said output image pixel 31. The particle corresponds to the particle that has been detected by the array detector 10 while recording the input image 20.

The trained neural network 40 is therefore configured to determine for each output image pixel 31 the associated particle number 32. The particle number 32 is generically zero or a positive number, particularly zero or a positive integer number and represents the number of particles 32 that are, i.e. according to the determination result of the trained neural network 40 associated to the location of the output image pixel 31. The output image pixels 31 having a particle number greater than zero indicate a particle impact location 102 of a particle impact event 200.

The output image 30 is associated to the input image 20. In particular, the output image pixels 31 are associated with the input image pixels 21. That is, there is a correspondence/ mapping between each input image pixel 21 to each output image pixel 31.

In one embodiment, the output image 30 comprises the same number of output image pixels 31 as the input image 20 comprises input image pixels 21. Particularly, the images 20, 30 have the same dimensions, e.g. the same number of rows and columns of pixels. In this case, each input image pixel 21 corresponds to exactly one output image pixel 31.

Each pixel 21,31 / detection element 11 may be associated to a coordinate in the image 20, 30/ detector array 10.

In case each input image pixel 21 corresponds to exactly one detection element 11, and thus particularly sharing the same coordinates, the mapping from the detection elements 11 to the output image pixels 21 is straightforward in case the output image 30 has the same number of pixels 31 as the input image 20.

The trained neural network 40 reduces the impact event 200 that spreads over a plurality of input image pixels 21 to a single associated output image pixel 31 indicative of the impact location 102 of the particle.

In case more than one particle has impacted on the same location, the output image pixel 31 may comprise a particle number 32 greater than one.

That is, the trained neural network 40 generates a high-resolution image of the impact locations 102 and associated particle numbers 32.

In case the output image 30 comprises more pixels than the input image 20, accordingly a resolution of the impact location 102 may be higher.

Typically, it is not desirable to generate an output image 30 with fewer pixels than the input image 20.

The term output image 30 has to be understood in a broad sense, namely that the output image is in essence a data structure representative of a tensor with tensor element. The tensor elements may correspond to the pixels, wherein the tensor represents the output image. The value of the tensor element corresponds to the value of the output image pixel, i.e. the particle number 32. The output image 30 is not necessarily displayed as an image, but may be evaluated using further methods. It may be that the forming of the output image 30 is solely given by the particle impact locations 102, e.g. the coordinates of the output pixels 31 having values greater than zero, are put out by the method according to the invention, so that further statistics may be determined from said output.

This method allows for high-density determination of impact locations 102, particularly in situations where an average density of particle impact locations 102 is higher than the number of detection elements 11, i.e. where in most detection elements 11 one or more particles impinge during a read-out cycle of the array detector 10.

This in turn allows for rapid recording and shortening of recording times.

A higher resolution of the output image 30 would require an output image 30 with even more pixels 31, as the trained neural network 40 determines the impact locations 102 only with a resolution determined by the output pixels 31. The inventors could demonstrate that a four to sixteen times higher number of output pixels 31 than input pixels 21 / detection elements 11 is possible with their method.

### Training and Training Data Generation

For a specific detector array 10 and a specific particle energy, here photons with an energy of 930 eV, the diffusion length 101 of the particle impact event 200 is measured from sparse recordings of photons in the input image 20. It is noted that the diffusion length 101 is typically not very sensitive to the photon energy so that the method may be applicable to a wide range of photon energies once the neural network is trained. Also, for each particle impact event 200 the number of charge carriers, here for example electrons created by an impinging photon, is measured. The quantity depends on the material of the detection elements and is a stochastic quantity and follows a Gaussian distribution, whose mean is proportional to the photon energy (divided by the band gap of the material) and to the reading electronics, and whose standard deviation scales with the square root of the mean.

With the diffusion length and the number of charge carriers produced by a single photon single particle impact events on the array detector are simulated.

The simulation comprises the generation of a plurality of training input images 20 based on randomly distributed particle impact locations. These training input images 20 form training pairs with the ground truth 50, that corresponds to the exact, i.e. non-blurred by the signal cloud, particle impact locations 102. The ground truth may be used as a training output image 30 having a predefined number of pixels.

For sake of simplicity, let us first assume the number of detection elements 11, the number of training input image pixels 21 and the training image output pixels 31 are the same.

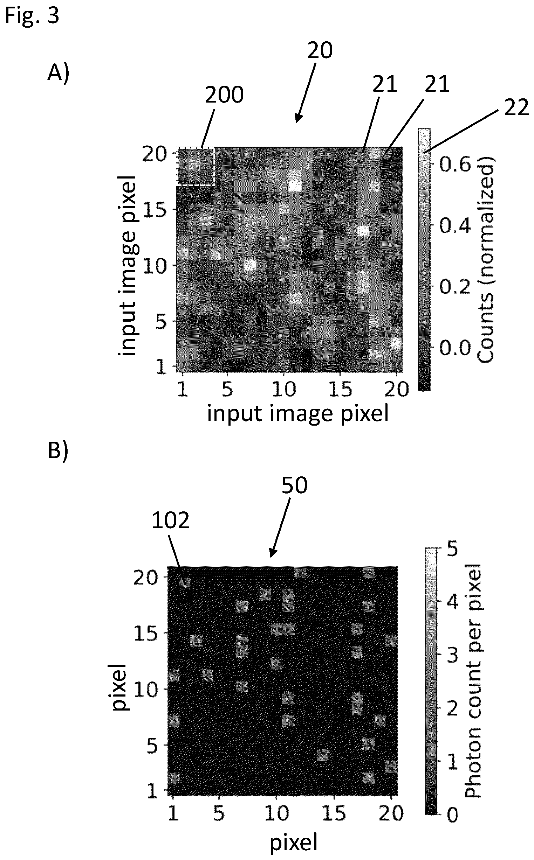

The comparison between the training input image 20 and the ground truth 50 is shown in Fig. 3A and Fig. 3B, respectively.

In an exemplary embodiment, but by far not the only possible embodiment of a neural network 40, an architecture based on a deep convolutional neural network may be used. In this exemplary neural network, convolutional layers 42 and rectified linear unit activation functions 43 are alternating. According to empirical experience, a six-layer structure provides the best results for this task. At the network output, a final convolutional layer 44 followed by a softmax activation and argmax function (see table 1) is arranged in the neural network 40. This defines an output image 30 that corresponds to a particle per output image pixel map. One pixel may adopt the value of 0, 1 or greater.

The training is now performed by providing the training input images 20 to the neural network 40 and training it by comparing and penalizing deviations of the generated output image 30 from the ground truth 50 by means that are known to the skilled person, e.g. by a gradient descent method etc., that is the weights and biases of the neural network 40 are tuned to minimize the value of a loss function describing the deviation during training. In the present case, a sparse categorical cross entropy loss function has been used. Tuning is done through gradient descent using the Adam (Adaptive Moment Estimation) method.

In case the output image 30 is to have more pixels than the input image 20, the ground truth 50 may be sampled at a higher frequency, allowing for a finer pixel grid, which in turn increases the resolution of the determination of the particle impact location. To adapt for the difference between the dimensions of the input image 20 and the output image 30, the neural network 40 may comprise an additional scaling layer (not shown).

**Table 1:**

| *Layer (type)* | *Output Shape* | *Number of Parameters* |
|---|---|---|
| Input Layer | (N, 20, 20, 1) | 0 |
| Convolutional Layer | (N, 20, 20, 64) | 640 |
| ReLU Activation | (N, 20, 20, 64) | 0 |
| Convolutional Layer | (N, 20, 20, 64) | 36928 |
| ReLU Activation | (N, 20, 20, 64) | 0 |
| Convolutional Layer | (N, 20, 20, 64) | 36928 |
| ReLU Activation | (N, 20, 20, 64) | 0 |
| Convolutional Layer | (N, 20, 20, 64) | 36928 |
| ReLU Activation | (N, 20, 20, 64) | 0 |
| Convolutional Layer | (N, 20, 20, 64) | 36928 |
| ReLU Activation | (N, 20, 20, 64) | 0 |
| Convolutional Layer | (N, 20, 20, 64) | 36928 |
| ReLU Activation | (N, 20, 20, 64) | 0 |
| Convolutional Layer | (N, 20, 20, 10) | 5770 |
| Softmax Activation | (N, 20, 20, 10) | 0 |
| Argmax | (N, 20, 20) | 0 |

Table 1 depicts the layer sequence of the neural network, together with the layer dimensions and function. Here, the exemplary input image size is 20 x 20 pixels. The input image is provided to the input layer 41 and processed further by the subsequent layers 42,43. The output layer 44 is the Argmax layer that provides the output image 30 as determined by the neural network 40.

### Performance comparison

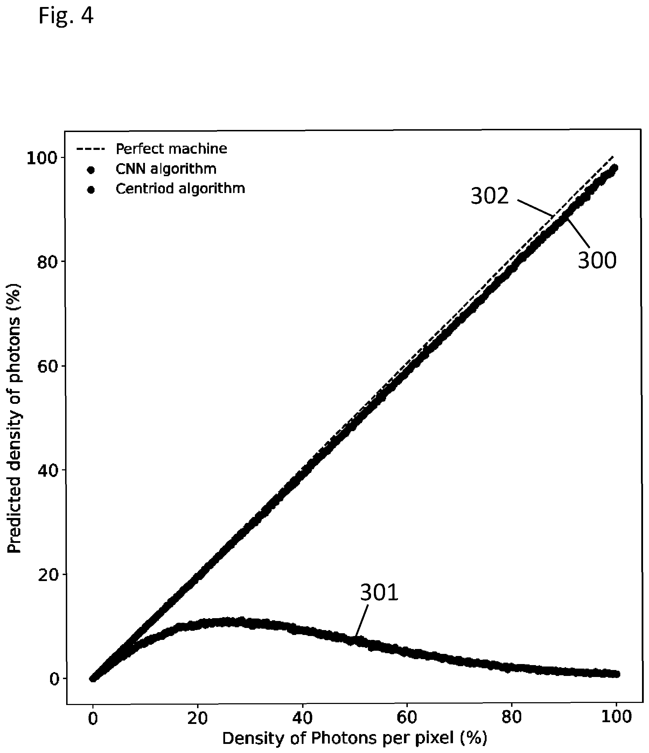

Fig. 4 shows a comparison of performance of methods known in the art that use a centroiding approach ("Centroid algorithm" in the legend) on sparse particle impact event densities and the method according to the invention.

The x-axis corresponds to a density of photons, i.e. particles, per pixel and goes up to a density of one particle impact event per pixel on average.

The y-axis depicts the predicted density of photons per pixel on average.

The broken line that has a slope of 1 corresponds to the result 302 of a perfect machine that would estimate the density 100% correct ("Perfect machine" in the legend).

For each density regime, a simulated input image has been provided to the method according to the invention and to a method as known in the art that relies on centroiding isolated particle impact events.

For low densities (< 2%-3%), seemingly both methods perform comparably well.

For higher densities the results 301 determined by the method known in the art deviate strongly from the perfect machine (lower curve), while the results 300 of method according to the invention stays close to the results 302 of perfect machine even in the regime of 100% density images, demonstrating the superiority of the method for high density recordings.

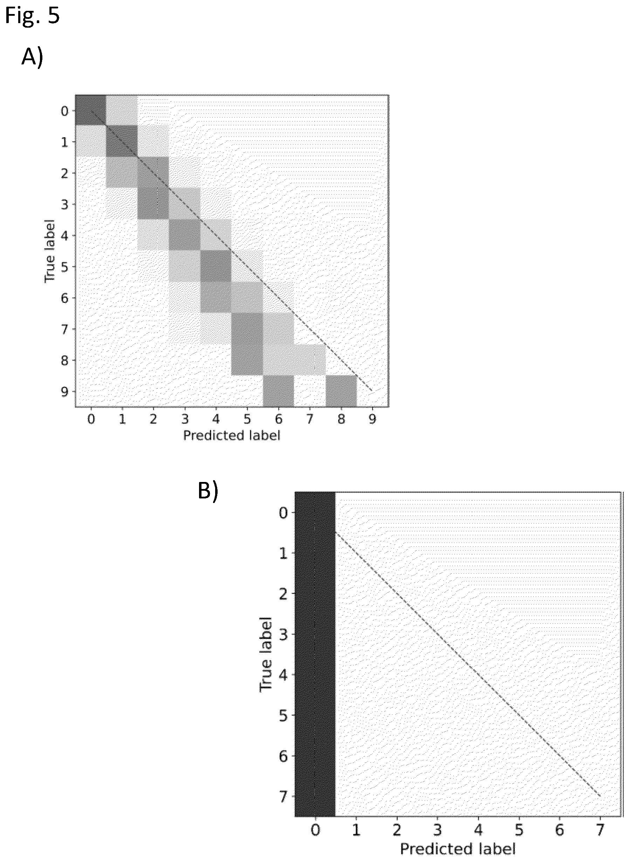

In Fig. 5, the confusion matrix for the method according to the invention has been determined from the same simulations for densities greater than 95% (Fig. 5A). Also, for the method known in the art, the confusion matrix has been determined cf. Fig. 5B. As can be seen, the centroiding method cannot distinguish overlapping impact events, wherein the method according to the invention is clearly capable of predicting very closely the ground truth with very few misassignments of the correct number of impact events per pixel. A slight bias to lower particle numbers can be observed for high photon numbers.

At low photon densities, even in this sparse regime, the proposed method outperforms the centroiding approach. While the centroiding method is able to accurately perform event classification, the proposed method consistently predicts the correct number of impact events with higher accuracy and fewer misassignments.

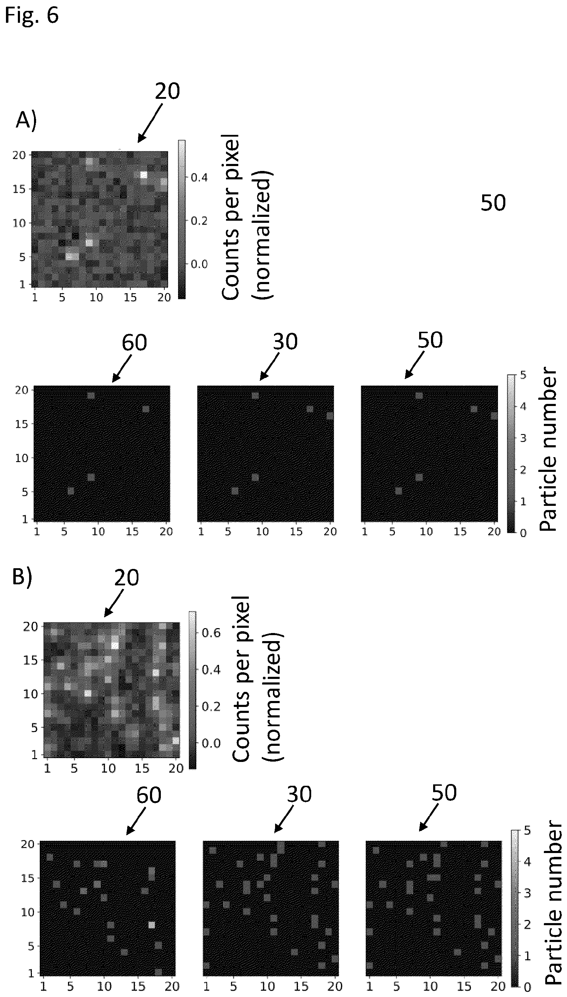

In Fig. 6A and Fig. 6B, visual comparisons are provided. Fig. 6A shows a low-density simulation and Fig. 6B shows a higher-density simulation.

In the first row of Fig. 6A, the simulated CCD image is shown, which corresponds to the input image 20. In the second row of Fig. 6A, the result 60 as provided by the centroiding algorithm, the result 30, i.e. the output image 30 from the method according to the invention and the ground truth 50 is shown.

Similarly, in the first row of Fig. 6B, the simulated CCD image is shown, which corresponds to the input image 20. In the second row of Fig. 6B, the result 60 as provided by the centroiding algorithm, the result 30, i.e. the output image 30 from the method according to the invention and the ground truth 50 is shown.

Already by visual inspection it can be seen that the method according to the invention outperforms the centroiding approach.

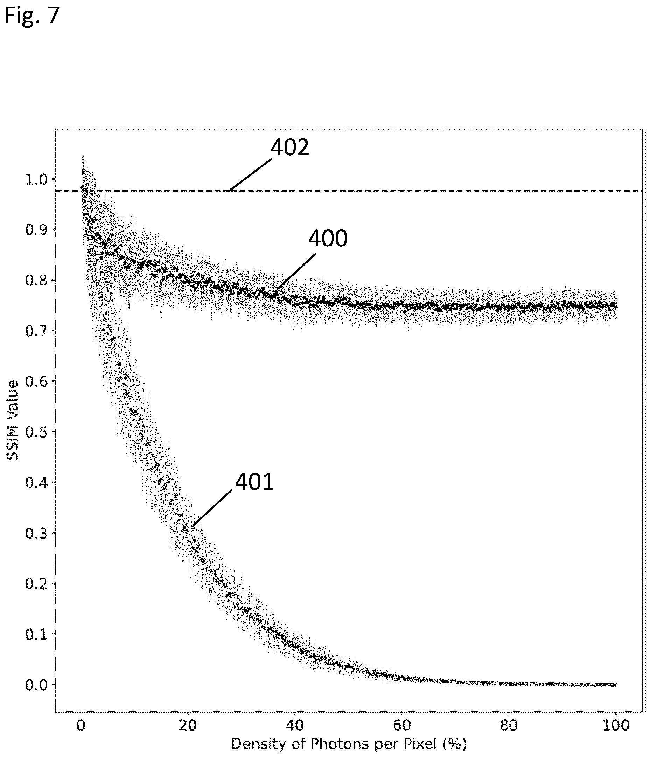

In Fig. 7, the structural similarity index measure (SSIM) obtained from both the proposed method and the centroiding algorithm is plotted as a function of the average particle density per pixel. The error bars represent the standard error of the average, based on the same simulations used in Figs. 4 to 6.

The SSIM 400for the method according to the invention never drops below 80% wherein result 401 of the centroiding method fails completely to resolve any structure at higher densities.

The perfect machine 402 results are shown as a broken line.

But also for low densities, the method according to the invention consistently outperforms the method known in the art.

Obviously, the method according to the invention may be executed on input images of different sizes without losing accuracy.

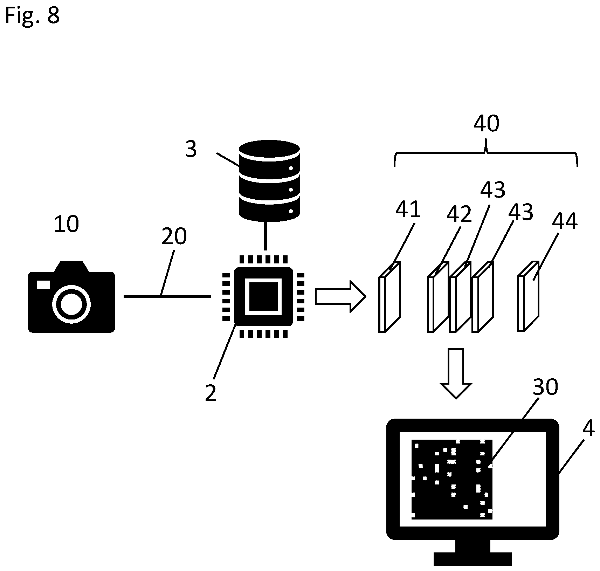

In Fig. 8 a system 1 for executing the method according to the invention.

The system 1 comprises the array detector 10 for detecting the particles, one or more processors 2 configured to execute a computer program that comprises computer program code that, when executed by the one or more processors 2, executes at least the task of the neural network 40. The one or more processors 2 may be understood as the evaluation module comprising the computer. The parameters for the trained neural network 40 and images may be stored on a non-transitory memory storage 3 connected to the one or more processors 3. The array detector 10 provides the input image 20 to the one or more processors 2, and thus the trained neural network 40 is executed on the input image 20. The output image 30 may be displayed on a display 4 comprised by the system 1.

### Reference numerals

- 1: system
- 2: processor(s)
- 3: memory
- 4: display
- 10: array detector
- 11: detection elements
- 12: particle impact event
- 20: input image
- 21: input image pixel
- 22: signal strength
- 30: output image
- 31: output image pixel
- 32: particle number
- 40: trained neutral network
- 50: ground truth
- 60: state of the art output image
- 100: signal cloud
- 101: diffusion length
- 102: impact location
- 200: particle impact event
- 300: results of method of the invention
- 301: results of centroiding algorithm
- 302: results of perfect machine
- 400: structural similarity index measure result
- 401: structural similarity index measure result

## Claims

1. A method for localizing particle impact events (21) on an array detector (10), the array detector (10) comprising a plurality of detection elements (11), the method comprising the steps of:
- acquiring at least one input image (20) indicative of a signal of one or more particle impact events (200), each particle impact event (200) extending over a plurality of input image pixels (21), wherein each particle impact event (200) is caused by an impact of a single particle on a single detection element (11) of the detector array (10), thereby generating a signal cloud (100) extending into neighboring detection elements (11),
- inputting each of the at least one input image (20) to a trained neural network (40) that is configured to determine an output image (30) having output image pixels (31) associated to the input image pixels (21), and to determine for each output image pixel (31) an associated particle number (32) corresponding to a number of particles associated to the output image pixel (31), wherein each output image pixel (32) having an associated particle number (32) greater than zero, is assigned as a particle impact location (102) of an impact event (200),
- outputting from the trained neural network (40) the one or more particle impact locations (102).

2. The method according to claim 1, wherein each one output image pixel (31) corresponds to exactly one detection element (11) of the detector array (10).

3. The method according to claim 1, wherein each detection element (11) has more than one output image pixels (31) associated to it, such that each particle impact location (102) is determined with a localization resolution greater than a size of a single detection element (11).

4. The method according to one of the preceding claims, wherein the number of input image pixels (21) comprising the particle impact events (200) in at least one input image (20) of the at least one input image (20) is greater than 35%.

5. The method according to one of the preceding claims, wherein the neural network (40) is trained to determine only two values for the associated particle number (32), wherein a first value of the two values, represents a particle impact location (102) of one or more particles, wherein a second value of the two values is indicative that the output image pixel (31) has no particle impact location (102) associated to it.

6. The method according to one of the claims 1 to 4, wherein in case the associated particle number (32) of an output image pixel (31) exceeds one, a plurality of particles is associated to the same particle impact location (102).

7. The method according to claim 6, wherein the associated particle number (32) is comprised in the range of 0 to 20 and/or wherein the trained neural network is configured to determine associated particle numbers greater than 5.

8. The method according to one of the preceding claims, wherein the detection elements (11) are of semiconductor-based detection elements, wherein the semiconductor exhibits a semiconductor band gap, wherein in case the particles are photons, the energy of the photons is higher than the semiconductor band gap.

9. The method according to one of the preceding claims, wherein a detector frame rate at which the input images (21) are acquired by the array detector (10) is adjusted such that an average number of the impact events is in the range of 2% to 200% in relation to the number of detection elements.

10. The method according to one of the preceding claims, wherein a plurality of input images (21) from the array detector (10) is acquired at a detector frame rate with an associated read-out time, wherein processing of each input image (20) by the trained neural network (40) takes less than a frame time.

11. The method according to one of the preceding claims, wherein the particle is selected from one of the group consisting of a bosonic or a fermionic particle.

12. A computer program comprising computer program code, that when executed on a computer, executes the method according to one of the preceding claims.

13. A particle recording system comprising an array detector with detection elements and an evaluation module comprising a computer, wherein the evaluation module is connected to the array detector, wherein the evaluation module is configured to receive recorded images from the array detector and wherein the evaluation module is further configured to execute the method according to one of the preceding claims.

14. The system according to claim 13, wherein the computer comprises the computer program of claim 12.
